# EUROPEAN PATENT SPECIFICATION

(11) **EP 4 562 469 B1**
(45) Date of publication and mention of the grant of the patent: **21.10.2026**
(21) Application number: 23744778.4
(22) Date of filing: 20.07.2023
(51) Int. Cl.: G02C 7/10, G02B 5/22, B29D 11/00

(54) **FUNCTIONALIZED OPTICAL LAYERED STRUCTURE, FUNCTIONALIZED OPTICAL ARTICLE, EYEWEAR CONTAINING THE SAME, AND THEIR METHODS OF MANUFACTURE**
FUNKTIONALISIERTE OPTISCHE SCHICHTSTRUKTUR, FUNKTIONALISIERTER OPTISCHER GEGENSTAND, DIESE ENTHALTENDE BRILLE UND DEREN HERSTELLUNGSVERFAHREN
STRUCTURE EN COUCHES OPTIQUES FONCTIONNALISÉE, ARTICLE OPTIQUE FONCTIONNALISÉ, LUNETTES LES CONTENANT, ET LEURS PROCÉDÉS DE FABRICATION

(30) Priority: 28.07.2022 EP 22306136
(43) Date of publication of application: 04.06.2025
(73) Proprietor: Essilor International, 94220 Charenton-Le-Pont (FR)
(72) Inventor: BURGOS, Montserrat, 94220 Charenton-le-Pont (FR); DE SOUSA, Manuela, 94220 Charenton-le-Pont (FR); ROBIN, Céline, 94220 Charenton-le-Pont (FR); PETER, Marc, 8810 Horgen (CH)
(74) Representative: Plasseraud IP
(86) International application number: PCT/EP2023/070176
(87) International publication number: WO 2024/022948

(56) References cited:
- EP-A1- 2 551 319
- EP-A2- 2 367 046
- EP-B1- 0 982 432
- JP-A- 2007 322 571
- JP-A- 2015 021 995

## Description

### Technical field

**This** invention relates to functionalized optical layered structure, functionalized optical article, eyewear containing the same, and their methods of manufacture

### Background information and prior art

The process of preparing a functionalized optical layered structure, such as an ophthalmic tinted lens, includes several manufacturing methods.

**As** is known in the prior art, lenses are often tinted by introducing colored additives to the molten glass, and similarly polycarbonate lenses are injection-molded from pre-colored plastic granules. A disadvantage associated with these methods is the very limited flexibility in the range of colors that can be offered. Moreover, lenses with highly varying thickness also exhibit non-uniform transmittance when colored by this method.

Conventionally, a dip dyeing method has been adopted in most cases as one of dyeing methods of dyeing plastic lenses for spectacles. This dip dyeing method includes: preparing a dyeing solution by mixing disperse dyes of primary colors of red, blue, and yellow and dispersing the mixture in water; heating the dyeing solution to about 90°C; and dipping a plastic lens into the heated solution, thereby dyeing the lens

**As** an alternative to the dip dyeing method, there has been proposed a vapor-deposition or sublimation dyeing method for example as disclosed in document JP-A-01 277 814. This method includes heating sublimable solid dye under vacuum to sublimate and vapor-deposit the sublimated dye onto a plastic lens which is heated simultaneously under vacuum, thereby dyeing the lens.

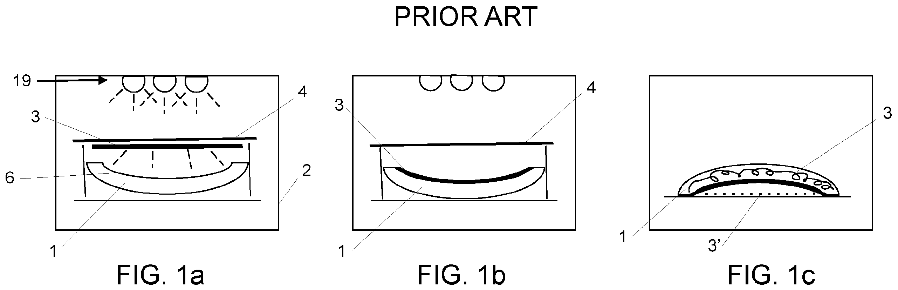

More precisely, as disclosed on figures 1a to 1c, a sublimation method of this kind includes a sublimation step (figure 1a) during which an optical base element 1 is provided in a sublimation enclosure 2, wherein sublimable coloring agents 3 that were previously printed on the surface of a paper support 4 and facing the optical base element 1, are sublimated and are then deposited on the facing surface 6 of the optical base element 1, what results in the assembly illustrated on figure 1b wherein the upper surface 6 of the optical base element 1 is covered with the sublimated coloring agents 3.

A further step occurring in an imbibition enclosure depicted on figure 1c, consists in fixing said coloring agents on the optical base element surface by exposing the assembly 1, 3 to heat during a sufficient time allowing the coloring agents to fix the base element's surface and/or thickness. Such a method is particularly appreciated since creating few coloring agents wastes, not many more coloring agents than needed being simply printed on the paper and then sublimated and fixed on the lens, compared to not so sustainable methods such as the above mentioned dip coloring method.

However, depending on the chemistry of the optical base element 1, the imbibition step can last more than one or even several hours for the fixing of the coloring agent on/through the lens, to be effective. Moreover, due to this relatively huge imbibition time and temperature, some already functionalized optical base elements cannot stand such a coloring method and needs to be colored with alternative solutions such as the dip coloring process known as being less sustainable. In addition, for curved optical base elements, as depicted on figure 1c, the coloring agents are usually deposited on the concave surface rather than on their convex surface, in order to avoid any migration of the sublimated coloring agents towards the periphery of the optical base element that occurs when the coloring agents are deposited on a convex side. Moreover, during the imbibition step, the obtained colored optical base element is then turned so that its colored concave side faces the ground of the imbibition oven to now avoid any migration of the coloring agents to the center of the lens during the imbibition step and therefore avoiding the creation of an unwanted color gradient (figure 1c). Due to this configuration, it is then not unusual to observe some wasted coloring agents deposited on the ground base of the imbibition enclosure instead of being fixed to the concave surface of the optical base element. This implies that for a given targeted lens color, few more amount of coloring agents would need to be printed in order to anticipate the coloring agents wastes 3' occurring during the imbibition steps.

Therefore, the dip dyeing method and conventional sublimation dyeing method, both have the disadvantages not to be able to provide a stably dyed lens. In particular, it is difficult to dye a lens with low dyeability or to dye a lens in deep colors, or in colors with high density. In the case of both the sublimation method and dip tinting method, it is even less possible to dye an already functionalized lens.

On the other hand, optical articles can be provided with additional functionalized structures consisting of single or a multilayer structures that may be laminated on and be adhered to an optical base element, to provide the obtained article with specific functionalities such as scratch resistance, polarization ...

However, in this case, if the optical article has to be tinted, it is the optical base element that needs to be tinted, which avoids a late tint differentiation, or it is one of the functional layers of the additional functionalized structure, which entails the above mentioned relatively long methods of tinting and/or the use of a relatively high amount of dyes to reach a targeted tint for the darkest optical articles to obtain.

Therefore, there is an actual need in new methods, which are industrially effective, for tinting optical lenses, which would not have the drawbacks of the prior art systems.

The document JP 2015 021995 A discloses colored adhesive layers.

### Summary

This goal is obtained according to the present invention by a functionalized optical layered structure according to claim 1, an optical article according to claim 5 and an eyewear according to claim 6.

The fact that the pressure-sensitive adhesive layer is the material that comprises the coloring agents, has the benefit to reduce the time needed for their fixation and their amount needed to reach a specific tint, compared to the time and amount of dyes needed when the coloring agents are sublimated on a plastic lens and even more compared to methods wherein the base element or the functional layers of a multilayered structure needs to be dyed. Another benefit is the possible late differentiation and the possibility to define a one piece flow process thanks to the speed of the method.

Preferably, the second element is a base optical element, and the at least one pressure-sensitive adhesive layer defines a peel force when dry and a peel force when wet, each above 13N/25 mm to separate the first from the second element.

More preferably, a decrease between the peel force of the pressure-sensitive adhesive layer (14') when dry and the peel force when wet is not higher than at least 35%.

According to an advantageous embodiment, said pressure-sensitive adhesive layer has a storage modulus G' below 1 .6 105 Pa at 85 °C, preferably below or equal to 1.5 105 Pa and demonstrates a dry peel strength and a wet peel force strength both above 20 N/25 mm, preferably both in the range of 21 to 40 N/25 mm inclusive.

According to yet other aspects of the invention, the functionalized optical layered structure may comprise any one of the following features considered alone or in combination between each other and/or between the above mentioned ones:
- said at least one pressure-sensitive adhesive layer has a thickness ranging from 5 µm to 150 µm or above,
- the pressure-sensitive adhesive material is selected from a polyacrylate-based compound,
- the first element represents a functional film including at least one functionality selected from color, polarization, photochromic, electrochromic, shock resistant, abrasion resistant, antistatic, antiglare, antifouling, anti-fog, rain repellent, interferential coatings such as anti-reflective or mirror coatings, dichroic filter and a spectral filter on a specified wavelength band.

Advantageously, the functionalized optical layered structure of said functionalized optical article may comprise any combination of the features of the functionalized optical layered structure mentioned above.

According to an embodiment of said eyewear device, the different layers of the base element of the edged functionalized optical article, are adhering to one another or are free from any air bubbles or peeling off between consecutive layers through the whole edged surface and up to the edge of the optical article.

Preferably, the functionalized optical layered structure of said eyewear device may comprise any combination of the features of the functionalized optical layered structure mentioned above.

The invention concerns also methods of manufacturing according to claims 7 and 13.

Ideally, during the sublimation step, the at least one pressure-sensitive adhesive layer is in a flat form, and a coloring agent transfer support facing the at least one pressure-sensitive adhesive layer being in a flat form. Optionnally, the at least one pressure-sensitive adhesive layer can be not flat i.e. bent if the consumable wherein it is incorporated is in a pre-formed or curved configuration.

In this case, the distance between coloring agent transfer support and the at least one pressure-sensitive adhesive layer is below 15 mm, preferably below 12 mm and preferably above 5 mm.

According to an interesting embodiment, the method also comprises an imbibition step to fix said coloring agents to the at least one pressure-sensitive adhesive layer after the coloring step.

In this case, advantageously, during the imbibition step, the at least one pressure-sensitive adhesive layer is disposed so that its surface on which the coloring agents are deposited, constitutes the upper surface of the at least one pressure-sensitive adhesive layer.

More preferably, the imbibition step comprises heating the at least one pressure-sensitive adhesive layer at a temperature and during a time allowing to soften without melting the at least one pressure-sensitive adhesive layer so that the coloring agents is fixed on the surface and/or penetrates the thickness of said at least one pressure-sensitive adhesive layer, for example below 1 hour and below 90°C preferably 10 min and below 90°.

Advantageously, the heating step comprises heating the at least one pressure-sensitive adhesive layer by air convection or by surface irradiation for example with an IR/UV laser irradiation.

The method of manufacturing a functionalized optical layered structure may comprise any one of the following features considered alone or in combination between each other and/or between the above mentioned ones:
- the step of coloring the at least one pressure-sensitive adhesive layer with coloring agents is implemented prior to the step of placing the at least one pressure-sensitive adhesive in contact with said at least one surface of said second element,
- the surfaces of said first element and second element intended to be placed in contact with said at least one adhesive layer, are subjected to a surface treatment, prior to said placing in contact, selected from a plasma treatment carried out in an inert nitrogen atmosphere with a dosage ranging from 40 to 100 W·min/m2 and a Corona treatment carried out in ambient air with a dosage ranging from 40 to 50 W·min/m2, so that the decrease between the peel force in a dry condition and the peel force in a wet condition is less than or equal to 35% inclusive.

According to a possible embodiment, it is also possible to tint the PSA supported between two protection liners. After the tinting of the PSA, it can be applied to a first element in the form of a functional film, and then applied onto the second element in the form of an optical base element.

Preferably, the functionalized optical layered structure of above mentioned methods of manufacture may comprise any combination of the features of the functionalized optical layered structure mentioned above.

According to another aspect, the invention concerns a method of manufacturing of an eyewear device, comprising:
- a step of thermoforming, according to a base element curvature, an ophthalmic functional film structure comprising:
   ∘ a first element representing a first single-layer or multi-layer functional film;
   ∘ at least one second element selected from a protection liner or a second functional film;
   ∘ at least one pressure-sensitive adhesive layer placed in contact with at least one surface of said first element and at least one surface of said second element, wherein the at least one pressure-sensitive adhesive layer is of optical quality and comprises coloring agents;
- a step of fixing the thermoformed ophthalmic functional film structure on said base element; and
- a step of edging the thermoformed ophthalmic functional film structure applied on the base element according to the dimensions of a supporting structure.

### Description of the drawings

For a more complete understanding of the description provided herein and the advantages thereof, reference is now made to the brief descriptions below, taken in connection with the accompanying drawings and detailed description, wherein like reference numerals represent like parts:
- Figures 1a to 1c, already mentioned, illustrate successive steps of manufacture of a functionalized optical layered structure according to the prior art,
- Figures 2a to 2g represent successive steps of manufacture of a functionalized optical layered structure according to the invention, figure 2g showing two embodiments of the functionalized optical article obtained when the functionalized optical layered structure is disposed on the concave (figure 2g.α) and on the convex (figure 2g.β) side of an optical base element
- Figure 3 schematically represents a functionalized optical layered structure according to the invention,
- Figure 4 illustrates a graphic with histograms representing the peeling force for different imbibition times of different PSA layers (with or without coloring agent) in wet conditions (black symbols) and dry conditions (white symbols).

### Detailed description of embodiments

In the description which follows the drawing figures are not necessarily to scale and certain features may be shown in generalized or schematic form in the interest of clarity and conciseness or for informational purposes. In addition, although making and using various embodiments are discussed in detail below, it should be appreciated that many inventive concepts that may be embodied in a wide variety of contexts, are provided herein. Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process.

To avoid unnecessary details for working the invention, the description may omit certain information already known to those skilled in the art.

### The detailed description

Although representative processes and devices have been described in detail herein, those skilled in the art will recognize that various substitutions and modifications may be made without departing from the scope of what is described and defined by the appended claims.

### Optical article / optical (base) element

According to the invention, an optical article comprises at least one pressure-sensitive adhesive layer that is of optical quality and that comprises coloring agents, and that is placed in contact with at least one surface of a first element and at least one surface of a second element.

The fact that the pressure-sensitive adhesive layer is the material that comprises the coloring agents, has the benefit to reduce the time needed for their fixation and their amount needed to reach a specific tint, compared to the time and amount of dyes needed when the coloring agents are sublimated on a plastic lens as is the case for the conventional method illustrated on figures 1a to 1c.

More precisely, for the purpose of the invention, an optical article is considered to be transparent when the observation of an image through this element is perceived without significant loss of contrast. Stated otherwise, the inter-position of a transparent optical element between an image and an observer of the latter does not significantly reduce the quality of the image. In the ophthalmic domain, this definition is considered to be met when the optical element has a haze no greater than 1, preferably no greater than 0.4. This definition of the term transparent is applicable, within the meaning of the invention, to all the objects regarded as such in the description.

The optical article is herein defined as one of an ophthalmic element/lens, an ocular visor, and sight optical systems. Non-limiting examples of ophthalmic elements include corrective and non-corrective lenses, including single vision or multi-vision lenses, which may be either segmented or non-segmented, as well as other elements used to correct, protect, or enhance vision, including without limitation magnifying lenses and protective lenses or visors such as found in spectacles, glasses, sunglasses, goggles and helmets.

The optical article is composed of an optical base element coated with a functional structure, both being described below.

The **optical base element** may be a standard component selected from the group consisting of optical lenses, windows, visors, preferably optical lenses, more preferably ophthalmic lenses.

The optical base element may be selected from the group consisting of a finished lens, a semi-finished lens, a progressive addition lens, an afocal lens, a plano lens, a unifocal lens, and a multifocal lens.

A semi-finished lens (SF) means a lens with one optical surface and another surface that needs to be ground to the wearer's prescription.

The optical base element could be made of any material classically used in optics. In particular the optical base element is made of plastic which could be thermoplastic or thermoset material. An exemplary of plastics includes polycarbonates; polyamides; polyimides; polysulfones; copolymers of polyethylene terephthalate and polycarbonate; polyolefins, namely polynorbornenes; polymers and copolymers of diethylene glycol bis(allylcarbonate); (meth)acrylic polymers and copolymers, namely (meth)acrylic polymers and copolymers derived from bisphenol-A; thio(meth)acrylic polymers and copolymers; urethane and thiourethane polymers and copolymers; epoxy polymers and copolymers; and episulfide polymers and copolymers. In a preferred embodiment the optical base element is made from polycarbonate or a high index poly(thio)urethanes with light refractive index of between 1.60 and 1.67 or episulfides with light refractive index of between 1 .60 and 1 .67. More preferably the optical base element is made of (thio)urethane based pre-polymer or an episulfide monomer.

### Functional film structure

A functional film structure consisting of :
- a single layer or a multilayer structure; supported by an
- optional a support film or carrier
- at least one layer of a pressure-sensitive adhesive of optical quality (PSA layer) so as to permanently retain said functional film structure on the surface of the optical base element,
- peelable protection liners one of which is in direct contact with the surface of the PSA layer, a second of which is in direct contact with the single layer, a multilayer structure or the support film of the functional film structure.

Preferably the support film is made of cellulose triacetate (TAC) and has a thickness of at least 40 microns, preferably a thickness in the range of 40 µm to 300 µm and preferably a thickness of 80 to 190 µm. Materials of the support film may be selected from the group of films made of cellulose triacetate (TAC), cellulose acetate butyrate (CAB), polycarbonate (PC), poly(ethylene terephthalate) (PET), poly(methylmethacrylate) (PMMA), urethane polymer (TPU), cyclo olefin copolymer (COC), polyester copoblock amide (like Pebax) and polyimides.

The functional film structure useful for the present invention includes at least one functional film or one single layer structure. In other words, the functional film structure may include one or more functional films, the functional film structure may include different functionalities.

Various types of functional films may be employed. Examples of functional films include tinted films, polarizing films, photochromic films, hard coat films, top coat films, anti-fog films, anti-smudge films, anti-reflective films and anti-static films. The functional film may be of single layer or multilayer structure. In other words it refers to a single functional film or a stratified structure comprising at least one support film and one or more individual functional layers (coatings or films) having identical or different characteristics that adhere together. Thus, according to one embodiment, the functional film may comprise a support film, said support film being adapted to adhere or be fixed to the optical base element by means of an adhesive layer.

The different functional films, if any, can be bounded to one another thanks to surface treatment and/or adhesives, the preferred option of which, in the field of optical element and ophthalmic, being the pressure-sensitive adhesive kind.

However, when the functional film structure contains a multilayer layer structure with several PSA layers, the PSA layer to be tinted according to the present invention, is preferably constituted by the PSA layer in direct contact with one of the two peelable liners because it is the more accessible further to the simple removal of the protection liner compared to the other PSA layers. But other PSA layers can also be tinted according to the invention.

And when the functional film structure contains a single layer structure, the PSA layer surface to be tinted according to the present invention, is constituted by the PSA layer surface in direct contact with one of the two peelable liners because it is easily accessible further to the removal of the protection liner.

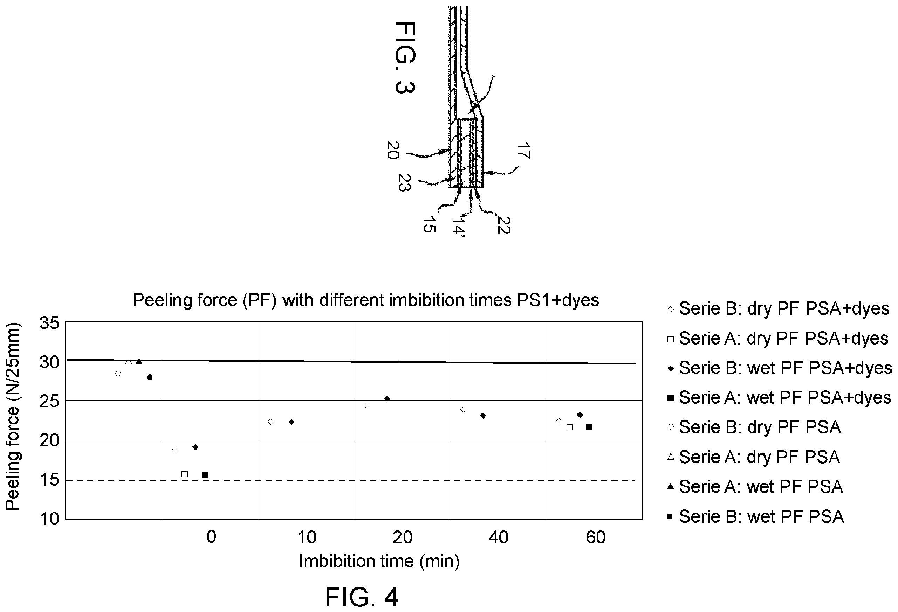

Preferred embodiments of the functional film structure useful for the present invention can consist in the ones disclosed in the patent application US 2016/0216425 from the applicant or in the patent application WO 2020/002606 also from the applicant and illustrated on figure 3.

### PSA "pressure-sensitive adhesive"

By "pressure-sensitive adhesive" it is meant a dry contact adhesive of viscoelastic nature which only needs a very slight pressure to adhere to the surfaces between which it is.

By "layer of a pressure-sensitive adhesive" it is meant a layer made of pressure-sensitive adhesive or made of pressure-sensitive adhesive. Pressure sensitive adhesives are characterized by their ability to require no activation by water, solvent or heat to exert a strong adhesive holding force on a surface.

Pressure sensitive adhesives may be available in the form of a continuous layer made of a pressure sensitive adhesive composition (i.e. the pressure sensitive adhesive layer) on a peelable liner (i.e. release liner) or sandwiched between two peelable liners, (referred to as pressure sensitive adhesive sheet, PSA sheet, pressure sensitive adhesive tape or adhesive transfer tape).

EP3436210 describes a PSA particularly useful for the optical base element according to the invention to exhibit edging-optimized properties. The pressure-sensitive adhesive constituting the pressure-sensitive layer useful for the present invention should have a storage modulus G' at 85 °C below 1 .6×10⁵ Pa, preferably equal to or below 1.5, more preferably between 1.0 and 1.5×10⁵ Pa. 85 degrees Celsius corresponds to a maximal temperature that may be applied to the optical element during a general edging step. In particular, this corresponds to maximal theoretical values of temperature generated during the edging step by friction of the edging wheel with the material of the lens when using aggressive conditions.

### Tv Color a*, b*, solar lens category

Luminous transmittance (Tv) is the optical product transmission perceived by the observer under specified solar radiation (%). Luminous transmittance is preferably considered as the quantity of light which is provided to the user's light through the optical article/product. It is defined by the mean transmittance value of a lens in the visible range 380-780 nm weighted by the solar irradiance (D65) and the photopic visibility function (V lambda). The principle is to measure the spectral transmission of the optical product at reference point at normal incidence using a spectrometer.

As such, the functionalized film structure according to the invention can be tailored so as to define, with the associated substrate or optical base element, different tints for sunglasses with different visible light mean transmission factors Tv:
- above 80 %, (known as clear lens of category or class 0),
- from 43 to 80 % (known as sunglasses of category or class 1),
- from 18 to 43 % (known as sunglasses of class 2),
- from 8 to 18% (known as sunglasses of class 3),
- below 8 % (known as sunglasses of class 4).

Said optical product may comprise a photochromic lens, an electrochromic lens, a clear lens, a blue cut function lens or a sun lens.

### PSA tinting according to the invention

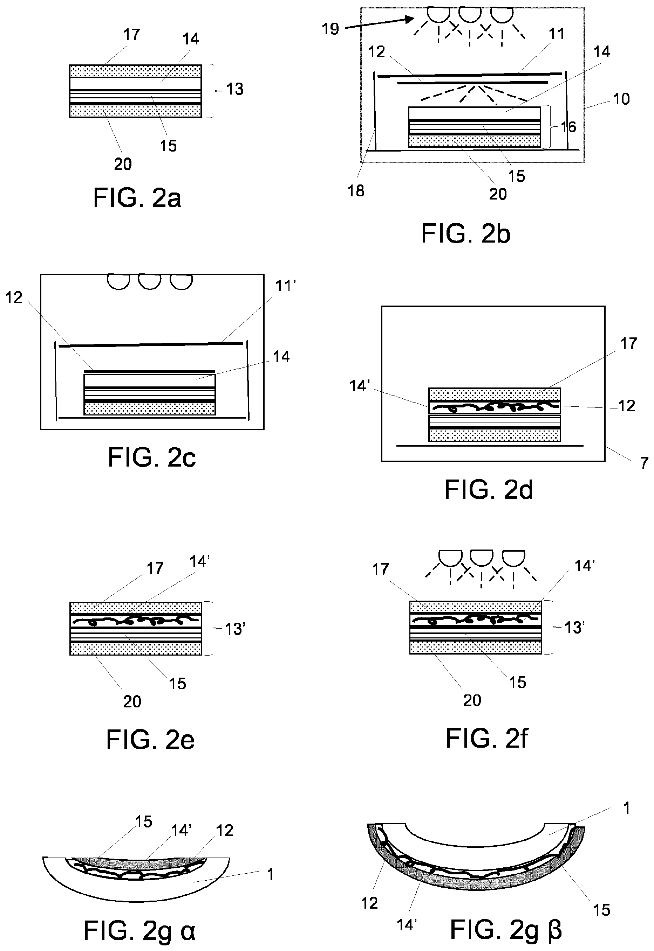

With reference to figures 2a to 2g, to dye the PSA layer of the functional film structure, the present inventors propose a dyeing method achieved by:
- a step of providing a functionalized optical layered structure 13 comprising:
   - a first element representing a first single-layer or multi-layer functional film 15
   - at least one pressure-sensitive adhesive layer 14 comprising at least one surface protected with a protection liner 17, the at least one pressure-sensitive adhesive layer being of optical quality and
- a step of coloring the at least one pressure-sensitive adhesive layer with coloring agents.

The step of coloring the at least one pressure-sensitive adhesive layer with coloring agents can be accomplished once the protection liner 17 is removed from the PSA layer surface by sublimation.

According to the claimed invention, as illustrated on figure 2b, the step of coloring the at least one pressure-sensitive adhesive layer is a step of sublimation, with coloring agents 12 that are sublimable.

Before the sublimation step, a coloring agent printing step consists in applying (outputting) dyeing inks containing sublimable dyes 12 to a coloring agent transfer support or base body 11 such as paper, by use of an inkjet printer.

As the sublimable dye (which contains a dissolved or fine-grained dispersed sublimatable dye), three dispersion dye inks of red, blue and yellow are used, each being a commercially available water-base ink. These inks are separately filled in commercially available ink cartridges for an ink jet printer. The cartridges are mounted in an ink jet printer. This printer in the present embodiment is a commercially available printer.

Such printer can be controlled so that regulation of the tint properties (hue, chroma and others) is handled by a drawing software, a CCM (computer color matching), or the like. Accordingly, data on the desired color can be stored in the computer so that the base body with the same color quality can be repeatedly produced as needed. A color tint (ex. gradation pattern) is also controlled in digital form, which makes it possible to repeatedly reproduce the base body in the same color density as required.

Also, before introducing the structure into the sublimation oven, as disclosed on figure 2b, the peelable liner 17 of the functional film structure 13, is taken off from the surface of the nearby PSA layer 14, defining as such a PSA nude surface structure 16 composed of the PSA layer 14, the single or multilayer structure 15, the second peelable liner and/or the support film if any 20.

As disclosed in figure 2b, during the sublimation step, the PSA nude surface structure 16 is in a flat form, and the base body 11, on which coloring agents 12 were previously printed, and facing the PSA nude surface structure 16 by its printed coloring agent surface, is also in a flat form, and disposed preferably above the PSA nude surface structure 16. The facing surfaces of the base body 11 and the PSA nude surface structure 16 are separated by a distance that is below 15 mm, preferably below 12 mm and preferably above 5 mm. Specific supporting means 18 to maintain both base body 11 and the PSA nude surface structure 16 in a flat form, parallel to one another and separated from each other by a specific distance are provided for example in the form of cylindrical interlocking sleeves.

Thanks to the heat provided by sublimation lamps 19 located above the base body 11 wearing the printed coloring agents or dyes 12 that faces the below PSA nude surface structure 16 and thanks to the vacuum provided in the sublimation enclosure 10, the sublimable dyes are ejected from the base body 11 toward the PSA nude surface structure 16 further to a vapor deposition transfer dyeing method (figure 2b). The sublimation lamps 19 are disposed in the vicinity of the base body 11 to heat the base body 10 to thereby sublimate the dye, some of them being disposed at an upper position in the enclosure 10 and other lamps at a lower position. In this way, the lamps 19 are arranged in the positions opposite to the PSA nude surface structure16 with respect to the base body 1. The lamps 19 in the present embodiment are halogen lamps, but not limited thereto. Any lamps or the like capable of heating the base body 11 in contactless relation therewith may be used.

The obtained PSA nude surface structure 16 on which coloring agents were sublimated as illustrated on figure 2c is covered by the peelable liner 17 and then transferred to an imbibition enclosure 21 represented on figure 2c while the base body 11' deprived from its coloring agents, can be discarded.

The purpose of the imbibition enclosure 7 illustrated on figure 2d is to fix by heat the dye to/through the PSA nude surface structure 16 on which coloring agents were sublimated, thereby obtaining a PSA tinted structure 14'.

Preferably, when the PSA nude surface structure 16 on which coloring agents were sublimated covered by the peelable liner 17, is introduced into the imbibition oven 7, the PSA surface on which the dyes were deposited, defines the superior surface of the PSA nude surface structure in the enclosure, so that said dyes just need to fix on and/or to penetrate into the below PSA material on which they were deposited, with the natural help of gravity, and without any risk of migration to the periphery or to the center of the PSA structure, since the latter is in a flat shape, or to the ground as was expected with the prior art method described with reference to figure 1c wherein the surface of the lens on which the dyes were sublimated was the lower one in the enclosure.

In reference to figure 3, an illustrative embodiment of the invention will be described, involving a functional film structure of the kind described in document WO 2020/002606 illustrated on figures 3 and 4a, the PSA layer of which has been tinted according to the method of the present invention.

More precisely, this preferred functional film structure comprises, from top to bottom:
- a counter-force liner 17
- an optional liner-side sliding layer 22
- a tinted PSA adhesive layer 14'
- a functional film or HMC stack (Antireflective, Hard coating, temporary grip coat overlayer, film) 15
- a carrier-side sliding layer 23
- a carrier layer 20

More precisely, such functional film structure includes a multi-layered film surrounded by a carrier layer 20 and a counter force liner 17. The carrier layer 20 can be made of a composition comprising polyethylene terephthalate (PET). The thickness of the carrier layer 20 may be in the range of 50 to 500 µm. The counter-force liner 17 can be made of a composition comprising polyethylene terephthalate (PET) or polyester (PE). The thickness may be in the range of 50 - 500 µm. According to a particular aspect the counter-force liner 17 comprises silicone, in particular on its side that faces the carrier layer 20. The counter force liner 17 may be a PPI Adhesive Product sold under reference PPI 0601 (0.075 mm) SILICONISED POLYESTER FILM.

A functional film 15 extends between said carrier layer 20 and said counter-force liner 17 in a predetermined receiving area. The functional film can be one layer or can be formed from a stack of layers.

The receiving area corresponds to a region immediately located around the functional film, including a space allowing for any small positioning float around an initial positioning of the functional film.

The functional film may modify the optical, transmission or mechanical properties of the optical article. For instance, the functional film may provide any of a polarization, a tint, or a tinting filter, a hard-coat function, an anti-reflective function, a protective coat and/or a surface quality function or a combination thereof.

The functional film 15 comprises preferably a thermoplastic plastic film with a haze value of preferably no greater than 0.4%, the functional film as a whole having a haze value of preferably no greater than 0.4% once removed from both the carrier layer 20 and the counter-force liner 17 and from any protective film intended to be removed once the functional film is present and fixed onto the optical article.

Haze value is measured by light transmission measurement using the Haze-Guard Plus^{©} haze meter from BYK-Gardner (a color difference meter) according to ASTM D1003-00. All references to "haze" values in this application are by this standard. The instrument is first calibrated according to the manufacturer's instructions. Next, the sample is placed on the transmission light beam of the pre-calibrated meter and the haze value is recorded from three different specimen locations and averaged.

The thickness of the functional film 15 may be in the range of 10 - 500 µm. The functional film 15 can be made of a composition comprising polyethylene terephthalate (PET), and/or polycarbonate and/or cellulose triacetate (TAC, for triacetate cellulose, in French) that may be coated with a hard coat (HC) or an antireflective (AR) coating forming part of the functional film 15.

Further, the functional film 15 may generally comprise further layers that enable some of the functions mentioned above.

The carrier layer 20 and the counter-force liner 17 are larger, at least in one dimension, than the receiving area, and in particular than the functional film 15 intended to be present in the receiving area. In particular, as illustrated in figure 3, the perimeter of the functional film layer 15 is surrounded by the perimeter of the carrier layer 20 and by the perimeter of the counter-force liner 17. This, in particular, enables to hold, fix or clamp, the carrier layer 20 to a machine or device without polluting, dirtying or applying stress onto the functional film 15.

A carrier-side sliding layer 23 may be positioned in between the carrier layer 20 and the functional film 15. Said carrier-side sliding layer 23 is adapted to enable a positioning float of the functional film 15 with regard to the carrier layer 20. In other words, the carrier-side sliding layer 23 is adapted so as to reduce a radial stress that would be imposed on the functional film 15 if it were to be too strongly fixed to the carrier layer 20. It is considered that during the forming step there is a point of maximum elevation from the initial plan. The radial stress mentioned above would be estimated to extend sensibly radially from said point of maximum elevation.

The thickness of the carrier-side sliding layer 23 may be in the range of 10 - 500 µm.

According to an embodiment, the carrier-side sliding layer 23 may comprise a double coated tape provided by company 3M under product reference 9088 (or also referred as "High Performance Double Coated Tape 9088 with adhesive 375") or any equivalent product.

According to another embodiment, the carrier-side sliding layer 23 may comprise an acrylic adhesive layer. The carrier-side sliding layer may have an all-light transmissivity of 90% or more, and/or a Haze value of 1.0 or less. The carrier-side sliding layer may have dry and wet adhesion properties of 25 N/25 mm or more, according to a testing method using:
- tensile meter,
- substrate of polycarbonate plate with corona treatment,
- peeling angle of 90°, and
- peeling speed: 25 mm/m in
- backing material: Polyethylene terephthalate film with corona treatment
- laminating condition onto polycarbonate plate: one round trip with a 2kg roller.

The acrylic adhesive layer can be sandwiched between two PET release liners. One of the PET release liners may have a peelability of 0.2 N/50 mm or less, and the other PET release liners may have a peelability of 1.0 N/50 mm or less, according to a testing method using a tensile tester, a peeling speed of 0.3 m/m in and a peeling angle of 180 °.

A liner-side sliding layer 22 may be positioned in contact with the counter-force liner 17 or with a layer fastened to the counter-force liner 17. The liner-side sliding layer 22 enables a positioning float of the functional film 15 with regard to the counter-force liner 17. In other words, the liner-side sliding layer 22 is adapted so as to reduce a radial stress that would be imposed on the functional film 15 if it were to be too strongly fixed to the counter-force liner 17. It is considered that during the forming step there is a point of maximum elevation from the initial plan. The radial stress mentioned above would be estimated to extend sensibly radially from said point of maximum elevation.

The liner-side sliding layer 22 can be made of a composition comprising polyethylene (PET). Alternatively, the liner-side sliding layer 22 may be made of a composition identical or similar to the one of the carrier-side sliding layer 23 proposed above. Alternatively, the liner side sliding layer, may be a pressure sensitive adhesive (PSA) according to PCT Application No WO2017168192 filed on March 29, 2016, included herein by reference. Said PSA further has the property of being an optical grade material with a haze value of preferably no greater than 0.4%.

The liner-side sliding layer 22 may comprise a layer of silicone on one or both sides. The thickness of the liner-side sliding layer 22 may be in the range of 10 - 100 µm. In particular, the counter-force liner 17 may comprise, at least on an area in contact with the liner-side sliding layer 22 a layer of silicone.

In some examples, the carrier side sliding layer 23 is a PSA provided by firm 3M under reference 8141, and the carrier side sliding layer is provided with a protective sliding film (that can be deleted after thermoforming) provided by firm NITTO under reference SWT10 or SWT 10+ R. According to other examples, the carrier side sliding layer 23 is a PSA provided by firm NITTO under reference CS9621, and the carrier side sliding layer 23 is provided with a protective sliding film (that can be deleted after thermoforming) provided by firm NITTO under reference SWT10 or SWT 10+R. According to other examples, the carrier side sliding layer 23 is a PSA provided by firm 3M under reference 9088, also referred as High Performance Double Coated Tape 9088 with adhesive 375.

As illustrated in the embodiment of figure 1, the multi-layered structure may also include an adhesive layer 14', such as a Pressure Sensitive Adhesive (also referred as PSA) layers, in between the functional film 15 and the liner-side sliding layer 22 or the counter-force liner 17. The adhesive layer 14' may be made of a composition identical or similar to the one of the carrier-side sliding layer 23 or the liner-side sliding layer 22 proposed above. According to a preferred embodiment, the adhesive layer 14', may be a pressure sensitive adhesive (PSA) according to PCT Application No EP3436210, included herein by reference. Said PSA further has the property of being an optical grade material with a haze value of preferably no greater than 0.4%.

The adhesive layer 14' may be part of the liner-side sliding layer 22. For example, the adhesive layer 14' may be in direct contact with the counter-force liner 17, modulo a possible layer of silicone.

Advantageously, before forming the functional film 15 in view of its lamination on an optical base element, according to US Application No US2016/0216425 included herein by reference, the surfaces of said first element and second element intended to be placed in contact with the adhesive layer 14' that is tinted according to the invention, may be subjected to a surface treatment, prior to said placing in contact, selected from a plasma treatment carried out in an inert nitrogen atmosphere with a dosage ranging from 40 to 100 W·min/m² and a Corona treatment carried out in ambient air with a dosage ranging from 40 to 50 W·min/m², so that the decrease between the peel force in a dry condition and the peel force in a wet condition is less than or equal to 35% inclusive.

More precisely, the surface of the counter-force liner 17, or liner-side sliding layer 22 or protection liner intended to be in contact with the tinted PSA, or the surface of the functional film 15, or carrier-side sliding layer 23, or of a second functional film, or a base optical element intended to be in contact with the tinted PSA, may be subjected to a surface treatment, prior to said placing in contact.

In the illustrated example, it is the surface of the base optical element intended to be in contact with the tinted PSA that receives a Corona treatment and the surface of the functional film 15 intended to be in contact with the tinted PSA, that are subjected to a surface treatment, prior to said placing in contact with said PSA.

Before forming the functional film 15 in view of its lamination onto an optical base element, according to PCT Application No WO2020002606 included herein by reference, the counter-force liner 17 is, at least in two different zones of the counter-force liner 17, preferably at least three different zones, fastened to the carrier layer 20. The functional film 15 is maintained, but preferably with a positioning float thanks to the carrier-side sliding layer 23 and the liner-side sliding layer 22, in between the carrier layer 20 and the counter-force liner 17. Such fastening before forming enables to sensibly maintain the position of the functional film 15 in the receiving area with regard to the carrier layer 20 and the counter-force liner 17, in a predetermined position, at least during thermoforming. To this end, fastening means are provided (electrostatic forces resulting from properties of the material of the counter-force liner 17 and/or of the carrier layer 20, additional means introduced between the counter-force liner 17 and/or of the carrier layer 20, such as glue or adhesive, or can result of a process applied to the counter-force liner 17 and/or of the carrier layer 20, such as a thermoplastic welding. Preferably fastening means extend outside the receiving area.

Further to the fastening means, an adhesive layer may fasten the functional film 15 within the receiving area onto the carrier layer 20, and/or onto the counter-force liner. Said adhesive layer may be an additional layer, the adhesive layer 14', or the liner-side sliding layer or the carrier-side sliding layer being PSA adhesive layers. Such adhesive layer enables to maintain the position of the functional film 15 in the receiving area with regard to the carrier layer 20 and/or the counter-force liner 17, in a predetermined position, before and during thermoforming, further to the effects of the fastening means.

It is this adhesive layer being an additional layer, the adhesive layer 14', and/or the liner-side sliding layer or the carrier-side sliding layer being adhesive layers and fastening the functional film 15 within the receiving area onto the carrier layer 20, and/or onto the counter-force liner that is/are tinted according to the invention.

In particular the counter-force liner 17 is configured to be inflated when positive pressure is applied on the face of the carrier layer 20 opposed to the counter-force liner 17.

When being inflated because of the pressure applied on the carrier layer 20, the counter-force liner 17 applies a counter-force to the functional film 15, on sensibly the whole area of said functional film 15. Thus delamination of some of the edges of the functional film 15 is limited or even prevented.

After forming and, possibly also before, the counter-force liner 17 may be in contact with the carrier layer 20 for substantially each zone of the counter-force liner 17 which is not in contact with the functional film 15 or which is not facing the receiving area. According to embodiments, fastening between the carrier layer 20 towards the counter-force liner 17 is done essentially all around the receiving zone.

A standard thermoforming machine can be used to thermoform a multi-layered film according to PCT Application No WO 2020/002606 included herein by reference.

Also, a gas venting system according to PCT Application No WO 2020/002606 included herein by reference, can be used to prevent defects on the multi-layered film 2 during thermoforming caused by gas trapped.

In an embodiment present, the counter-force liner 17 may be removed after forming in view of the laminating step.

In particular, a laminating machine is used in order to enable a lamination of the functional film, borne by the carrier layer, onto an optical article. Said laminating machine has mobile elements adapted for approaching the thermoformed functional film toward the optical article and/or for approaching the optical article toward the thermoformed functional film. Thereafter the functional film is brought in contact with the optical article. In a particular embodiment the thermoformed functional film, fixed onto the carrier layer presents a convex shape and is brought in contact with a concave face of the optical article. In another embodiment, the thermoformed functional film, fixed onto the carrier layer presents a concave shape and is brought in contact with a convex face of the optical article. In yet another embodiment, two thermoformed functional film, presenting respectively a concave and a convex shape, are brought in contact respectively with a convex and a concave faces of the optical article.

In an embodiment a positive pressure is applied from the side of the carrier so as to push the functional film onto the face of the optical article.

The pressure may be maintained during a duration comprised between 10 seconds and 10 minutes. This enables to ensure that the adhesive layer is correctly adhering the functional film onto the optical article.

Thereafter, a cooling step is applied in some embodiments.

Eventually, the carrier layer is removed from the functional film. If present the carrier-side sliding layer may also be removed.

Further to these last steps, an optical article comprising a film fixed on one of its surfaces is obtained, with no or reduced defects. Defects are prevented at least using the counter-force liner and in some embodiments, further defects may be prevented using the possible sliding layers, and the possible air vents.

In a particular embodiment, the laminating machine is the thermoforming machine. In a further example the carrier layer is clamped in the same clamping system during both the thermoforming and the lamination. The carrier layer may possibly be declamped so as to remove the counter force liner. In such machine a cooling step may be applied between the thermoforming and the lamination.

According to a particular embodiment, the silicone that may be present on the carrier layer and/or the counter-force liner may be a silicone provided by company Siliconature under product reference SILPHAN S50.

According to various embodiments, the carrier side of the counter force liner may be in contact directly with the functional film or one of the layers on top of the functional film which are intended to be present on the optical article and intended to bring a function to the optical article.

### PSA tinting Experiments & results

An illustrative example and some steps exemplifying the invention and key results are provided below.

### Printing step

Different inks or dyes commercially available, that are sublimable, useful for ophthalmic articles, and compatible with a chosen substrate material (for example polycarbonate) are provided in three main colors: red, yellow and blue, generally constituted by water based solutions.

The printing step of said dyes according to a specific formulation onto the paper transfer can last 2 minutes and the drying 10 minutes.

### Surface preparation

A preferred functional film structure 13 is provided with a PSA layer 14 commercialised by Nitto under the reference EL5902RT and of a thickness of 50 microns, as the PSA in contact with the functional film 15, and intended to be in contact with the optical base element after application of the preferred functional film structure onto said optical base element. The preferred functional film structure 13 comprises the multilayered functional film 15 that is provided with hard coating layer and anti-reflective layer, a carrier-side sliding layer 23 and a carrier 20 as depicted in figure 3.

To maximize the adhesion of the PSA layer 14 intended to be tinted by sublimable dyes, the two surfaces that will be in contact with said tinted PSA, i.e. on the one hand the surface of an optical base element on which the functional film structure is intended to be applied, and on the other hand, the surface of the functional film 15 of the functional film structure 13, and/or the two surfaces of the PSA itself, will be the object of a surface treatment such as a Corona treatment.

More precisely, the Corona treatment according to US Application No US2016/0216425 included herein by reference, is applied on the one hand on the surface of an optical base element intended to be in contact with a PSA layer to be tinted and on the other hand, on the surface of a multifunctional film including hard coating and anti reflective layers 15 intended to be in contact with a PSA layer to be tinted, and/or the two surfaces of the PSA itself.

### Sublimation step

As disclosed on figure 2b, the counter-force liner 17 is removed from the PSA layer to be tinted to obtain the PSA nude surface structure 16 composed of the PSA layer 14, the single or multilayer structure 15, the second peelable liner and/or the support film or carrier 20.

The sublimation step is performed at a temperature: 55°C (link to the sublimation lamp), a pressure: vacuum (more or less 0.1kPa), with a run sublimation cycle of 6 min.

After the sublimation step, according to figure 2c, the PSA nude surface structure 16 is obtained, on which coloring agents were sublimated laying on the surface of the PSA layer.

The counter-force liner 17 is then applied on the surface of the tinted PSA layer surface14 to protect it during its transfer to the imbibition enclosure 7 (figure 2d).

### Imbibition step

After an imbibition step of the protected tinted PSA layer surface14' structure in an oven during 10 minutes at 90°C, as illustrated on figure 2d, the sublimated coloring dyes or agent are fixed onto the PSA layer surface and/or through the thickness of the PSA layer, thereby obtaining a PSA tinted structure 14'.

The counter-force liner 17 is removed before applying the functional multilayer structure 15 on the Corona treated surface of the optical base element via the PSA tinted structure 14' by lamination after thermoforming.

### Thermoforming & Lamination steps

The pressure applied may reach 2 or 3 bars.

The pressuring step is done with a temperature applied onto the film of about 25 to 80°C. The temperature for thermoforming may also be between 80°C-140°C, for example 100°C-130°C, for example 115°C to 125°C, or about 120°C, the maximum temperature depending on the base film material, its thickness and the final target curvature of the film/lens .

The pressure is maintained during a duration comprised between 10 seconds and 10 minutes. This enables to ensure that the adhesive layer is correctly adhering the functional film onto the optical article.

Thereafter, a cooling step is carried out.

Eventually, the carrier layer is removed from the functional film. If present the carrier-side sliding layer may also be removed.

Further to these last steps, an optical article comprising a film fixed on one of its surfaces is obtained, with no or reduced defects. Defects are prevented at least using the counter-force liner and in some embodiments, further defects may be prevented using the possible sliding layers, and the possible air vents.

In this embodiment illustrated on figure 2g β, the functional film is applied on the convex face of a lens having a curvature radius of 81 mm. The functional film is thermoformed so as to have a curvature radius of 81 mm.

The adhesive layer 14 is a PSA adhesive commercialized under the name: EL5902RT by Nitto.

### Thickness PSA: 50µm

The counter-force liner provided by firm PPI Adhesive Products under reference PPI 0601 (0.075 mm) SILICONISED POLYESTER FI LM.

### Peeling test

The peel test consists of rolling a strip of 25 x 70 mm pressure-sensitive adhesive material onto a protective film strip. This tape (protective film + adhesive material) is glued on a plane support on which is fixed beforehand a film. This test makes it possible to test the adhesion between the film and the protective film. The glass is conditioned at least 24 h (at 23 ° C ± 3 ° C, 50% RH ± 10%) before peeling. The film is peeled at a 90 ° angle at a speed of 2.54 cm / min. At half of the test, a quantity of water is added to the interface to measure the wet coat force. The force is expressed in N / 25m m. Software continuously measures peel force as a function of displacement. This force is averaged over a length of 10 mm to 20 mm for dry and wet peeling.

The samples are then washed, coated and finally trimmed with a Kappa (trade name) trimming machine. Once trimmed, the samples are inspected to determine if there are cosmetic defects such as separation between films in the polarizing structure. When the stack presents defects, this is indicated in the 'Lens manufacture' column of the table by a cross. When the trimming does not present any defect, this is indicated in the same column by 'OK').

### Peeling tests & results

Two series of tests (A & B) were run with the formulations as indicated in the Table 1.

**Table 1. Conditions of sublimation experience to define imbibition time, for series A and B respectively.**

| Color | Pixel quantity/dye on the formulation (normally for MR8) | | |
|---|---|---|---|
| | Red | Yellow | Blue |
| NONE | 0 | 0 | 0 |
| BROWN 3 | 465 | 405 | 503 |

As disclosed in the below Table 2, in the first series (A), the fact of having or not an imbibition step was evaluated. Two conditions were set: no imbibition step and an imbibition step during 1h at low temperature (90°C) (knowing the HMC stack can withstand temperatures above 100°C) to avoid cracking of the anti-reflective stack that is on the consumable.

In the second series (B), intermediate imbibition times at 90°C were tested. The results on peeling force show (Table 2) that 10-20min of imbibition is enough to be in a safe area in terms of adhesion (dry and wet peeling force >20 N/25mm) and that the dry and wet adhesion are the same. Probably the optimum of imbibition will be around 20 minutes, where we reach 25N/25mm. For very dark tints (categories 3 & 4) a longer imbibition time in order to fix the dyes may be required and can be determined easily by the skilled person from the study of the color change occurring after several days compared to the originally deposited one.

**Table 2. Peeling test results of series A and B.**

| Quantity of samples | Color | Curing | Preeling Force N/25mm Serie B | | Peeling Force N/25mm Serie A | |
|---|---|---|---|---|---|---|
| | | | Dry | Wet | Dry | Wet |
| 3 | NONE | Without | 28.4 | 28.0 | 30 | 30 |
| 3 | BROWN 3 | Without | 18.6 | 19.1 | 15.6 | 15.6 |
| 2 | BROWN 3 | With 10min at 90°C | 22.3 | 22.3 | | |
| 2 | BROWN 3 | With 20min at 90°C | 24.3 | 25.3 | | |
| 2 | BROWN 3 | With 40min at 90°C | 23.8 | 23.0 | | |
| 3 | BROWN 3 | With 60min at 90°C | 22.4 | 23.2 | 21.6 | 21.6 |

The results of the peeling force (Table 2) of series A, show that without imbibition, the peel force adhesion is reduced (16N/25mm without imbibition vs. 22N/25mm with 1h at 90°C) but the dry and wet peel force are the same, what is a good result.

Figure 4 represents the peeling force results with different imbibition times for a PSA without dyes (left hand) and PSA+dyes (the other), and in dry and wet conditions. The broken line corresponds to the minimum adhesion from previous studies on lamination technology. The solid line corresponds to the maximum adhesion of PSA without dyes.

Figure 4 shows that when dyes are sublimated onto the PSA some adhesion force is lost (29N/25mm without dyes vs. 25N/25mm with dyes) but the obtained adhesion of 25N/25mm in the presence of dyes is considered to be very good.

### Impact of distance between PSA and transfer paper

The fact that, during the sublimation step, the PSA layer 14 is in a flat form and that the transfer paper is also in a flat form, allows to decrease the distance between both objects and to get darker lenses than what is obtained with the same dye amount in the coloring agent solution formulation when it is the curved lens that receives the sublimated dyes. For example, when it is a curved lens that receives the sublimated dyes a Tv~15% is obtained compared to the a darker color with a Tv~10% obtained when it is the PSA layer 14 that receives the sublimated dyes, for the same dye amount in the coloring agent solution formulation.

This was verified with sublimation tests ran with ink formulations according to the Table 3:
- First sublimation with two pairs Biplano lens vs. Plano/curved lens
- Second sublimation with three pairs of "Biplano lens vs. PSA-consumable

For these tests, the imbibition time for the PSA-consumable was fixed at 1h at 90°C. To be able to measure transmission spectra of the PSA-consumable tinted by sublimation, PSA-patch of the consumable were glued on a biplano lens (without the non-optical elements such as carrier, liner, ...). To avoid confusion, in the Table 3, a PSA-consumable is referred to, even though it is glued onto a biplano lens for the purpose of manipulation. The "Biplano lens" in the table refers to a biplano lens tinted by sublimation with standard sublimation method.

**Table 3. Ink formulations used to prove that in a flat support (biplano lens or plano PSA film), darker final lenses are obtained with the same amount of dyes than with a curved plano lens**

| Quantity of lenses pairings | Configuration | Tinted film with and without curing after sublimation | | |
|---|---|---|---|---|
| | | Red | Yellow | Blue |
| 2 pairings | Plan/biplano without film | 465 | 405 | 503 |
| 3 pairings | biplano with/without film | 465 | 405 | 503 |

The results shown in Table 4 represents the Tv and color (a*, b*) obtained onto a biplano lens, plano/curved lens and PSA-flat consumable.

Accordingly, for the same amount of dyes on the transfer paper, when the coloring agents are sublimated onto a biplano lens or a PSA flat film, a darker lens is always obtained (Tv comprised between 7.5 -9.4% with 8.6 for the PSA flat film), whereas when we use a plano curved lens we get a lighter lens (Tv~15%). This might be due to the fact that the transfer paper is flat and if coloring agents are sublimated from a flat support onto an also flat substrate (biplano lens or PSA film), these two elements can be closer (printed paper and biplano lens or flat PSA film) and the amount of dyes needed on the paper to get a given transmission be reduced compared to the one needed for standard sublimation process from a flat printed paper onto a curved lens.

Dispersion at the tinting step (without hard coating step)

As demonstrated by the below Tables 4 and 5, the dispersion of the sublimation process step is very similar between sublimation on a curved lens and on a flat PSA film.

**Table 4. Ink formulations used to demonstrate that the dispersion of the sublimation process step is very similar between sublimation on a curved lens or a flat PSA film**

| Quantity of lenses pairs | Configuration | Tinted film with and without curing after sublimation | | |
|---|---|---|---|---|
| | | Red | Yellow | Blue |
| 2 by day during 5 days | Plan/Biplano with film | 465 | 405 | 503 |

**Table 5. Results of dispersion on a PSA-consumable and Plano curved lens.**

| | | Dispersion per day | | | Total dispersion | | |
|---|---|---|---|---|---|---|---|
| Configuration | Day | Tv% | a* | b* | Tv% | a* | b* |
| Biplano Film | 1 | 0.83 | 0.31 | 0.06 | 2.77 | 3.65 | 0.87 |
| Biplano Film | 2 | 0.3 | 0.04 | 0.52 | | | |
| Biplano Film | 3 | 0.36 | 0.18 | 0.2 | | | |
| Plano | 1 | 1.37 | 0.09 | 0.11 | 2.34 | 2.71 | 1.64 |
| Plano | 2 | 0.15 | 0.04 | 0.27 | | | |
| Plano | 3 | 0.54 | 0.19 | 0.26 | | | |

### Test of different colors and surfacing

Several prototypes in different colors have been laminated onto biplano and edged with success. Some samples have been edged and no edge defects were observed. Tinted consumables have also been laminated onto curved lenses and edged with good results.

### Coloration types

Different coloration types can be obtained: full and uniform coloration, gradient coloration, specific patterns such as logos or marks, thanks to the use of a specific mask(s) applied on the PSA surface during the sublimation step.

### Advantages

The current invention reaches the goal of providing any sunwear color with a fast delivery technology, since it is the consumable that is tinted with a fast tinting process (~15 minutes) compared to known solutions of tinting a lens or a film that requires ~3 hours. Besides, the tinting of the consumable can be done in parallel to the surfacing of the lens, adding no extra time to the manufacturing method, and the final tint is obtained during the lamination of the functional film on the back and/or on the front side of the lens i.e. adding no specific additional step that would lengthen the lamination process.

Moreover, compared to standard sublimation onto lenses, the method according to the invention have a reduced energy consumption since the imbibition step on PSA layers requires almost 10 to 20 times less duration since the PSA is soft and better host for dyes compare to a lens (10-20 minutes of imbibition at 90°C is enough to ensure good adhesion while the imbibition cycle in standard sublimation process of dyes on lenses is between 1 hour 30min to 3 hours at high temperature 125°C-160°C to ensure dyes penetration inside the hard lens substrate).

Furthermore, the following other advantages are observed thanks to the present innovation:
- less complexity:
   - tooling simplification: only one tooling system optimised for flat PSA film is now necessary, instead of specific tooling for each lens geometry
   - formulation/pattern printing simplification regardless of lens substrate or power. Indeed, for a given color, only one dyes formulation optimised for flat PSA film is now necessary, whereas different formulations/pattern printings respectively adapted to the different optical powers were needed for conventional methods, to ensure homogeneity between the center and the edge of a curved lens receiving on its curved surface the sublimated dyes.
- from a quality point of view, metamerism is eliminated between substrates and dispersion due to the hard coating process
- overall, there is no wet chemistry involved in the process, and it is possible to automate it (in-line two pieces process)
- reduced dyes consumption thanks to the fact that the dyes sublimation step is made from a flat paper to a flat PSA film, instead to a curved lens. Indeed, the distance between the flat sublimation paper and the flat film can be the same and reduced to the minimum which reduces the dyes consumption since the more the distance, the more the dyes tend to migrate to other parts of the vacuum chamber (e.g. walls) instead of moving towards the support to be tinted. Moreover, dyes loss is prevented during the imbibition step compared to the conventional sublimation on lens method, since during the imbibition step according to the invention, the dyes are imprisoned between the liner /PSA and the TAC
- for a given color, only one dyes formulation can be sublimated onto the same PSA layer that can then be applied on any kinds of substrates. Accordingly, the same spectra and color appearance is obtained for different substrates. On the opposite, in the standard sublimation process, different dyes formulations were needed for different substrates, because of their different chemistry and abilities to be tinted (for examples: Polycarbonate and 1.6 substrates). The consequence, apart from the complexity of having for the same color from different formulations by substrate, is that for the same color reference the spectral curve was different by substrate. That results in metamerism
- in the case of sublimation onto PSA, the color applied to the PSA is definitive, since no further hard coating process is necessary (the hard coating being already on the film).

## Claims

1. A functionalized optical layered structure comprising
- a first element representing a first single-layer or multi-layer functional film (15);
- at least one second element selected from a protection liner or a base optical element (1) or a second functional film
- at least one pressure-sensitive adhesive layer placed in contact with at least one surface of said first element and at least one surface of said second element,
wherein the at least one pressure-sensitive adhesive layer (14') is of optical quality and comprises coloring agents (12), and wherein the coloring agents (12) comprise sublimated coloring agents.

2. The functionalized optical layered structure as claimed in any one of the preceding claims, wherein the second element is a base optical element (1), and wherein the at least one pressure-sensitive adhesive layer (14') defines a peel force when dry and a peel force when wet, each above 13N/25 mm to separate the first element (15) from the base optical element (1).

3. The functionalized optical layered structure as claimed in the preceding claim, wherein a decrease between the peel force of the pressure-sensitive adhesive layer (14') when dry and the peel force when wet is not higher than 35%.

4. The functionalized optical layered structure of any one of the preceding claims wherein said pressure-sensitive adhesive layer (14') has a storage modulus G' below 1.6×10⁵ Pa at 85°C, preferably below or equal to 1.5×10⁵ Pa and demonstrates a dry peel strength and a wet peel force strength both above 20 N/25 mm, preferably both in the range of 21 to 40 N/25 mm inclusive.

5. A functionalized optical article comprising a base element (1) and applied on one surface of said base element, a functionalized optical layered structure comprising:
- a first element representing a first single-layer or multi-layer functional film (15) ;
- at least one second element selected from a protection liner or a base optical element (1) or a second functional film
- at least one pressure-sensitive adhesive layer placed in contact with at least one surface of said first element and at least one surface of said second element,
wherein the at least one pressure-sensitive adhesive layer (14') is of optical quality and comprises coloring agents (12), and wherein the coloring agents (12) comprise sublimated coloring agents.

6. An eyewear device comprising a supporting structure such as a frame and at least one functionalized optical article enclosed within the supporting structure, and edged according to the dimensions of the supporting structure, said functionalized optical article comprising a base element and applied thereon, a functionalized optical layered structure comprising:
- a first element representing a first single-layer or multi-layer functional film (15);
- at least one second element selected from a protection liner or a base optical element (1) or a second functional film
- at least one pressure-sensitive adhesive layer placed in contact with at least one surface of said first element and at least one surface of said second element,
wherein the at least one pressure-sensitive adhesive layer (14') is of optical quality and comprises coloring agents (12), and wherein the coloring agents (12) comprise sublimated coloring agents.

7. A method of manufacturing a functionalized optical layered structure comprising the steps of:
- providing a functionalized optical layered structure comprising:
- a first element representing a first single-layer or multi-layer functional film (15)
- at least one pressure-sensitive adhesive layer
wherein the least one pressure-sensitive adhesive layer (14') is of optical quality and wherein the method comprises a step of coloring at least one surface of the at least one pressure-sensitive adhesive layer with coloring agents (12), wherein the step of coloring the at least one pressure-sensitive adhesive layer is a step of sublimation, wherein the coloring agents (12) are sublimable, and wherein during the sublimation step, the at least one pressure-sensitive adhesive layer is in a flat form, and a coloring agent transfer support facing the at least one pressure-sensitive adhesive layer is in a flat form.

8. The method according to the preceding claim, wherein the distance between coloring agent transfer support and the at least one pressure-sensitive adhesive layer is below 15 mm, preferably below 12 mm and preferably above 5 mm.

9. The method according to any one of the preceding claims 5 to 7, comprising an imbibition step to fix said coloring agents to the at least one pressure-sensitive adhesive layer after the coloring step.

10. The method according to the preceding claim, wherein during the imbibition step, the at least one pressure-sensitive adhesive layer is disposed such that its surface on which the coloring agents are deposited, constitutes the upper surface of the at least one pressure-sensitive adhesive layer.

11. The method according to the preceding claim, wherein the imbibition step comprises heating the at least one pressure-sensitive adhesive layer at a temperature and during a time allowing to soften without melting the at least one pressure-sensitive adhesive layer such as the coloring agents to be fixed on the surface and/or penetrate the thickness of said at least one pressure-sensitive adhesive layer, for example below 1 hour and below 90°C preferably 10 min and below 90°.

12. The method according to the preceding claim, wherein the heating step comprises heating the at least one pressure-sensitive adhesive layer by air convection or by surface irradiation.

13. A method of manufacturing a functionalized optical article, comprising:
i. a step of thermoforming, according to a base element curvature of a base element (1), a functionalized optical layered structure comprising:
1. a first element representing a first single-layer or multi-layer functional film (15);
2. at least one second element selected from a protection liner or a second functional film
3. at least one pressure-sensitive adhesive layer (14') placed in contact with at least one surface of said first element and at least one surface of said second element, being of optical quality and comprising coloring agents (12), and wherein the coloring agents (12) comprise sublimated coloring agents,
ii. a step of fixing the thermoformed functionalized optical layered structure on said base element.

## Patentansprüche

1. Funktionalisierte optische Schichtstruktur, die Folgendes umfasst
- ein erstes Element, das einen ersten Ein- oder Mehrschichtfunktionsfilm (15) repräsentiert;
- wenigstens ein zweites Element, das aus einer Schutzauskleidung oder einem optischen Basiselement (1) oder einem zweiten Funktionsfilm ausgewählt ist
- wenigstens eine Haftklebstoffschicht, die in Kontakt mit wenigstens einer Oberfläche des ersten Elements und wenigstens einer Oberfläche des zweiten Elements platziert ist,
wobei die wenigstens eine Haftklebstoffschicht (14') von optischer Güte ist und Färbemittel (12) umfasst, und wobei die Färbemittel (12) sublimierte Färbemittel umfassen.

2. Funktionalisierte optische Schichtstruktur nach einem der vorhergehenden Ansprüche, wobei das zweite Element ein optisches Basiselement (1) ist und wobei die wenigstens eine Haftklebstoffschicht (14') eine Schälkraft im trockenen Zustand und eine Schälkraft im nassen Zustand jeweils oberhalb von 13 N/25 mm zum Separieren des ersten Elements (15) von dem optischen Basiselement (1) definiert.

3. Funktionalisierte optische Schichtstruktur nach dem vorhergehenden Anspruch, wobei eine Abnahme zwischen der Schälkraft der Haftklebstoffschicht (14') im trockenen Zustand und der Schälkraft im nassen Zustand nicht mehr als 35 % beträgt.

4. Funktionalisierte optische Schichtstruktur nach einem der vorhergehenden Ansprüche, wobei die Haftklebstoffschicht (14') einen Speichermodul G' unterhalb von 1,6×10⁵ Pa bei 85 °C, vorzugsweise unter oder gleich 1,5×10⁵ Pa aufweist und eine Trockenschälfestigkeit und eine Nassschälkraftfestigkeit beide oberhalb von 20 N/25 mm, vorzugsweise beide im Bereich von 21 bis 40 N/25 mm eingeschlossen, aufweist.

5. Funktionalisierter optischer Artikel, der ein Basiselement (1) umfasst und auf einer Oberfläche des Basiselements aufgebracht ist, wobei eine funktionalisierte optische Schichtstruktur Folgendes umfasst:
- ein erstes Element, das einen ersten Ein- oder Mehrschichtfunktionsfilm (15) repräsentiert;
- wenigstens ein zweites Element, das aus einer Schutzauskleidung oder einem optischen Basiselement (1) oder einem zweiten Funktionsfilm ausgewählt ist
- wenigstens eine Haftklebstoffschicht, die in Kontakt mit wenigstens einer Oberfläche des ersten Elements und wenigstens einer Oberfläche des zweiten Elements platziert ist,
wobei die wenigstens eine Haftklebstoffschicht (14') von optischer Güte ist und Färbemittel (12) umfasst, und wobei die Färbemittel (12) sublimierte Färbemittel umfassen.

6. Brillenvorrichtung, die eine Stützstruktur, wie etwa eine Fassung, und wenigstens einen funktionalisierten optischen Artikel umfasst, der in der Stützstruktur eingefasst ist und gemäß den Abmessungen der Stützstruktur randbearbeitet ist, wobei der funktionalisierte optische Artikel ein Basiselement und darauf aufgebracht eine funktionalisierte optische Schichtstruktur umfasst, die Folgendes umfasst:
- ein erstes Element, das einen ersten Ein- oder Mehrschichtfunktionsfilm (15) repräsentiert;
- wenigstens ein zweites Element, das aus einer Schutzauskleidung oder einem optischen Basiselement (1) oder einem zweiten Funktionsfilm ausgewählt ist
- wenigstens eine Haftklebstoffschicht, die in Kontakt mit wenigstens einer Oberfläche des ersten Elements und wenigstens einer Oberfläche des zweiten Elements platziert ist,
wobei die wenigstens eine Haftklebstoffschicht (14') von optischer Güte ist und Färbemittel (12) umfasst, und wobei die Färbemittel (12) sublimierte Färbemittel umfassen.

7. Verfahren zum Herstellen einer funktionalisierten optischen Schichtstruktur, welches die folgenden Schritte umfasst:
- Bereitstellen einer funktionalisierten optischen Schichtstruktur, die Folgendes umfasst
- ein erstes Element, das einen ersten Ein- oder Mehrschichtfunktionsfilm (15) repräsentiert
- wenigstens eine Haftklebstoffschicht,
wobei die wenigstens eine Haftklebstoffschicht (14') von optischer Güte ist und wobei das Verfahren einen Schritt des Färbens wenigstens einer Oberfläche der wenigstens einen Haftklebstoffschicht mit Färbemitteln (12) umfasst, wobei der Schritt des Färbens der wenigstens einen Haftklebstoffschicht ein Schritt einer Sublimation ist, wobei die Färbemittel (12) sublimierbar sind, und wobei während des Sublimationsschrittes die wenigstens eine Haftklebstoffschicht in einer flachen Form vorliegt, und ein der wenigstens einen Haftklebstoffschicht zugewandter Färbemitteltransferträger in einer flachen Form vorliegt.

8. Verfahren nach dem vorhergehenden Anspruch, wobei die Entfernung zwischen dem Färbemitteltransferträger und der wenigstens einen Haftklebstoffschicht unterhalb von 15 mm, vorzugsweise unterhalb von 12 mm und vorzugsweise oberhalb von 5 mm liegt.

9. Verfahren nach einem der vorhergehenden Ansprüche 5 bis 7, das einen Imbibitionsschritt zum Fixieren der Färbemittel an der wenigstens einen Haftklebstoffschicht nach dem Färbeschritt umfasst.

10. Verfahren nach dem vorhergehenden Anspruch, wobei während des Imbibitionsschrittes die wenigstens eine Haftklebstoffschicht derart angeordnet wird, dass ihre Oberfläche, auf der die Färbemittel abgeschieden werden, die obere Oberfläche der wenigstens einen Haftklebstoffschicht darstellt.

11. Verfahren nach dem vorhergehenden Anspruch, wobei der Imbibitionsschritt Erwärmen der wenigstens einen Haftklebstoffschicht auf eine Temperatur und für eine Zeitdauer umfasst, die Erweichen, ohne Schmelzen, der wenigstens einen Haftklebstoffschicht ermöglichen, so dass die Färbemittel an der Oberfläche fixiert werden und/oder die Dicke der wenigstens einen Haftklebstoffschicht durchdringen, zum Beispiel unterhalb 1 Stunde und unterhalb von 90 °C, vorzugsweise 10 min und unterhalb von 90 °C.

12. Verfahren nach dem vorhergehenden Anspruch, wobei der Erwärmungsschritt Erwärmen der wenigstens einen Haftklebstoffschicht durch Luftkonvektion oder durch Oberflächenbestrahlung umfasst.

13. Verfahren zum Herstellen eines funktionalisierten optischen Artikels, welches Folgendes umfasst:
i. einen Schritt des Thermoformens, gemäß einer Basiselementkrümmung eines Basiselements (1), einer funktionalisierten optischen Schichtstruktur, die Folgendes umfasst:
1. ein erstes Element, das einen ersten Ein- oder Mehrschichtfunktionsfilm (15) repräsentiert;
2. wenigstens ein zweites Element, das aus einer Schutzauskleidung oder einem zweiten Funktionsfilm ausgewählt ist
3. wenigstens eine Haftklebstoffschicht (14'), die in Kontakt mit wenigstens einer Oberfläche des ersten Elements und wenigstens einer Oberfläche des zweiten Elements platziert ist und die von optischer Güte ist und die Färbemittel (12) umfasst, und wobei die Färbemittel (12) sublimierte Färbemittel umfassen,
ii. einen Schritt des Fixierens der thermogeformten funktionalisierten optischen Schichtstruktur auf dem Basiselement.

## Revendications

1. Structure stratifiée optique fonctionnalisée comprenant
- un premier élément représentant un premier film fonctionnel monocouche ou multicouche (15) ;
- au moins un second élément choisi parmi un revêtement de protection ou un élément optique de base (1) ou un second film fonctionnel
- au moins une couche adhésive sensible à la pression placée au contact d'au moins une surface dudit premier élément et d'au moins une surface dudit second élément,
l'au moins une couche adhésive sensible à la pression (14') étant de qualité optique et comprenant des agents colorants (12), et les agents colorants (12) comprenant des agents colorants sublimés.

2. Structure stratifiée optique fonctionnalisée selon l'une quelconque des revendications précédentes, le second élément étant un élément optique de base (1), et l'au moins une couche adhésive sensible à la pression (14') définissant une force de pelage lorsqu'elle est sèche et une force de pelage lorsqu'elle est humide, chacune supérieure à 13 N/25 mm pour séparer le premier élément (15) de l'élément optique de base (1).

3. Structure stratifiée optique fonctionnalisée selon la revendication précédente, une diminution entre la force de pelage de la couche adhésive sensible à la pression (14') à l'état sec et la force de pelage à l'état humide n'étant pas supérieure à 35 %.

4. Structure stratifiée optique fonctionnalisée selon l'une quelconque des revendications précédentes, ladite couche adhésive sensible à la pression (14') ayant un module de conservation G' inférieur à 1,6 × 10⁵ Pa à 85 °C, de préférence inférieur ou égal à 1,5 × 10⁵ Pa et présentant une résistance au pelage à l'état sec et une résistance à la force de pelage à l'état humide toutes deux supérieures à 20 N/25 mm, de préférence toutes deux dans la plage de 21 à 40 N/25 mm inclus.

5. Article optique fonctionnalisé comprenant un élément de base (1) et appliqué sur une surface dudit élément de base, une structure stratifiée optique fonctionnalisée comprenant :
- un premier élément représentant un premier film fonctionnel monocouche ou multicouche (15) ;
- au moins un second élément choisi parmi un revêtement de protection ou un élément optique de base (1) ou un second film fonctionnel
- au moins une couche adhésive sensible à la pression placée au contact d'au moins une surface dudit premier élément et d'au moins une surface dudit second élément,
l'au moins une couche adhésive sensible à la pression (14') étant de qualité optique et comprenant des agents colorants (12), et les agents colorants (12) comprenant des agents colorants sublimés.

6. Dispositif de lunettes comprenant une structure de support telle qu'une monture et au moins un article optique fonctionnalisé enfermé dans la structure de support, et débordé en fonction des dimensions de la structure de support, ledit article optique fonctionnalisé comprenant un élément de base et appliqué sur celui-ci, une structure stratifiée optique fonctionnalisée comprenant :
- un premier élément représentant un premier film fonctionnel monocouche ou multicouche (15) ;
- au moins un second élément choisi parmi un revêtement de protection ou un élément optique de base (1) ou un second film fonctionnel
- au moins une couche adhésive sensible à la pression placée au contact d'au moins une surface dudit premier élément et d'au moins une surface dudit second élément,
l'au moins une couche adhésive sensible à la pression (14') étant de qualité optique et comprenant des agents colorants (12), et les agents colorants (12) comprenant des agents colorants sublimés.

7. Procédé de fabrication d'une structure stratifiée optique fonctionnalisée comprenant les étapes de :
- fourniture d'une structure stratifiée optique fonctionnalisée comprenant :
- un premier élément représentant un premier film fonctionnel monocouche ou multicouche (15)
- au moins une couche adhésive sensible à la pression
l'au moins une couche adhésive sensible à la pression (14') étant de qualité optique et le procédé comprenant une étape de coloration d'au moins une surface de l'au moins une couche adhésive sensible à la pression avec des agents colorants (12), l'étape de coloration de l'au moins une couche adhésive sensible à la pression étant une étape de sublimation, les agents colorants (12) étant sublimables, et, pendant l'étape de sublimation, l'au moins une couche adhésive sensible à la pression étant sous une forme plane, et un support de transfert d'agent colorant vis-à-vis de l'au moins une couche adhésive sensible à la pression étant sous une forme plane.

8. Procédé selon la revendication précédente, la distance entre le support de transfert d'agent colorant et l'au moins une couche adhésive sensible à la pression étant inférieure à 15 mm, de préférence inférieure à 12 mm et de préférence supérieure à 5 mm.

9. Procédé selon l'une quelconque des revendications précédentes 5 à 7, comprenant une étape d'imbibition pour fixer lesdits agents colorants à l'au moins une couche adhésive sensible à la pression après l'étape de coloration.

10. Procédé selon la revendication précédente, pendant l'étape d'imbibition, l'au moins une couche adhésive sensible à la pression étant disposée de telle sorte que sa surface sur laquelle les agents colorants sont déposés constitue la surface supérieure de l'au moins une couche adhésive sensible à la pression.

11. Procédé selon la revendication précédente, l'étape d'imbibition comprenant le chauffage de l'au moins une couche adhésive sensible à la pression à une température et pendant un temps permettant de se ramollir sans faire fondre l'au moins une couche adhésive sensible à la pression telle que les agents colorants à fixer sur la surface et/ou pénétrer dans l'épaisseur de ladite au moins une couche adhésive sensible à la pression, par exemple en dessous de 1 heure et en dessous de 90 °C de préférence 10 min et en dessous de 90 °C.

12. Procédé selon la revendication précédente, l'étape de chauffage comprenant le chauffage de l'au moins une couche adhésive sensible à la pression par convection d'air ou par irradiation de surface.

13. Procédé de fabrication d'un article optique fonctionnalisé, comprenant :
i. une étape de thermoformage, selon une courbure d'élément de base d'un élément de base (1), d'une structure stratifiée optique fonctionnalisée comprenant :
1. un premier élément représentant un premier film fonctionnel monocouche ou multicouche (15) ;
2. au moins un second élément choisi parmi un revêtement de protection ou un second film fonctionnel
3. au moins une couche adhésive sensible à la pression (14') placée en contact avec au moins une surface dudit premier élément et au moins une surface dudit second élément, étant de qualité optique et comprenant des agents colorants (12), et les agents colorants (12) comprenant des agents colorants sublimés,
ii. une étape de fixation de la structure stratifiée optique fonctionnalisée thermoformée sur ledit élément de base.
